# EUROPEAN PATENT SPECIFICATION

(11) **EP 4 390 702 B1**
(45) Date of publication and mention of the grant of the patent: **14.10.2026**
(21) Application number: 22216446.9
(22) Date of filing: 23.12.2022
(51) Int. Cl.: G06F 11/34, G06F 30/20, G06F 30/331, G06F 30/30

(54) **AGILE AND ITERATIVE METHODOLOGY TO DESIGN CUSTOM ARCHITECTURES FOR LOW INTERFERENCE CONTENTION WITH PMCS**
AGILE UND ITERATIVE METHODIK ZUR ENTWICKLUNG ANGEPASSTER ARCHITEKTUREN FÜR EINEN GERINGEN INTERFERENZBEITRAG MIT PMCS
MÉTHODOLOGIE AGILE ET ITÉRATIVE POUR CONCEVOIR DES ARCHITECTURES PERSONNALISÉES POUR UNE FAIBLE CONTENTION D'INTERFÉRENCE AVEC DES PMC

(43) Date of publication of application: 26.06.2024
(73) Proprietor: Rockwell Collins, Inc., Cedar Rapids, IA 52498 (US)
(72) Inventor: SALINAS HERNANDO, Gonzalo, Cork T12 X2TN (IE); GARCIA GENER, Alejandro, Cork T12 FA49 (IE); DE LA CRUT MARTINEZ, Raul, Rochestown T12 RKH6 (IE)
(74) Representative: Dehns

(56) References cited:
- WO-A1-2020/112999
- AGIRRE IRUNE ET AL: "On the tailoring of CAST-32A certification guidance to real COTS multicore architectures", 2017 12TH IEEE INTERNATIONAL SYMPOSIUM ON INDUSTRIAL EMBEDDED SYSTEMS (SIES), IEEE, 14 June 2017 (2017-06-14), pages 1 - 8, XP033328121, DOI: 10.1109/SIES.2017.7993376
- XU YINAN ET AL: "Towards Developing High Performance RISC-V Processors Using Agile Methodology", 2022 55TH IEEE/ACM INTERNATIONAL SYMPOSIUM ON MICROARCHITECTURE (MICRO), IEEE, 1 October 2022 (2022-10-01), pages 1178 - 1199, XP034214371, DOI: 10.1109/MICRO56248.2022.00080

## Description

### FIELD

This invention relates to agile and iterative methodology to design safe custom microarchitectures with low interference and contention profiles using performance monitoring counters.

### BACKGROUND

There has been a recent movement from single core processors to processors with multiple processing cores within the same processor device, which can provide a significant performance increase with a similar amount of power consumption.

As such, a wide range of multi-processor system-on-chip (MPSoC) architectures targeted for embedded applications have appeared on the market over the last years. This kind of MPSoC includes multiple processing cores, either homogeneous or heterogeneous, on the same die. Multi-core processors (MCP) with two or more processing cores overcome the frequency scaling, power consumption and heat dissipation problems associated with single core processors, all whilst the effective throughput is increased.

As such, MCPs have delivered significant performance improvements over traditional single-core processors. However, their use in safety-critical systems (such as avionics systems) poses some unique challenges that are otherwise not present in typical single-core processors, which otherwise run a single process at a time.

For efficiency, MCP designs include shared resources on the device. Processor cores in MCPs are typically tightly or loosely coupled, sharing intermediate memory systems (cache hierarchies) and interconnection buses in order to access main memory and external input/output (I/O) devices. MPSoC architectures, in order to simplify board layout design, integrate more components onto the device to reduce the physical footprint.

Depending on the hardware implementation, tasks running on different cores (i.e. different processes or threads) may share some of these resources while they are being executed. However, the simultaneous execution of tasks on a parallel computer architecture can cause contention in the form of delays accessing certain shared resources and thus interference and variability on their typical execution time. Contention can be a particularly serious issue when it comes to real-time and/or safety-critical systems.

In safety-critical applications, for example in avionics systems such as those for helicopters or other aircraft, there are specific requirements that stem from the concurrent performance of tasks in MCPs. These include application isolation and determinism. Application isolation relates to the separation of the tasks of one application from the rest of the running processes, e.g. to shield the application from exploits. Determinism is the property of, when given a particular input, always producing the same output, and always passing through the same sequence of states. Furthermore, in such situations and for certification, it is typically necessary to know the actual execution time of a given set of tasks, which cannot be known without knowing the structure of a MCP and any potential contention between the tasks.

In any von Neumann architecture, processors in MPSoCs are tightly coupled (i.e. highly dependent on one another, such that changes in one module create a ripple effect in the performance of others) or loosely coupled (i.e. weakly associated with one another, such that changes in each component have limited effect in the performance of the others). They have intermediate memory systems (cache hierarchies) and interconnection buses to access main memory and external I/O devices. Depending on the specific hardware implementation, tasks running on different cores (e.g. processes or threads) may share some of these resources while they are being executed.

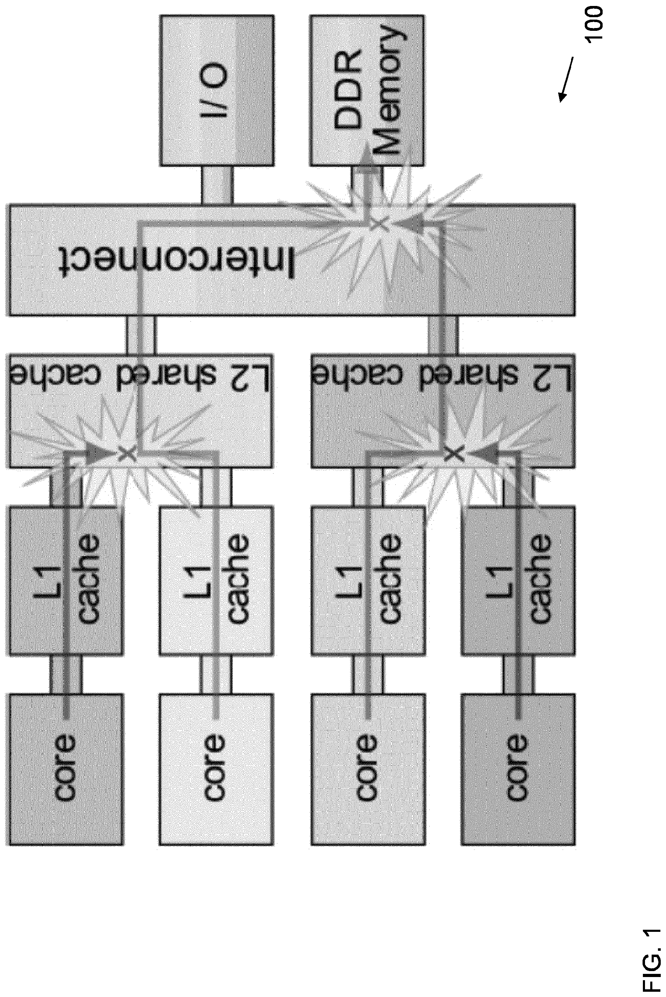

For example, Figure 1 shows an example MPSoC 100 and the resources that are shared between four separate cores, specifically the two Level 2 shared cache banks, and the common interconnect network. The simultaneous execution of tasks on different cores on a parallel computer architecture can cause contention in the form of delays accessing certain shared resources and thus interference and variability on their typical execution time.

Specifically, in the real-time embedded system realm for avionics, task interference due to the contention on shared resources poses a big challenge for determinism, and therefore, certification. The uncertainty of not knowing beforehand the actual execution time on an MCP hinders certification on the avionics scope, e.g. as detailed in the CAST-32A, MULCORS and ARINC-653 papers.

In this way, when providing an MCP for safety-critical uses, it is generally necessary to ensure that multiple applications running on a single core do not interfere with another application's performance, and additionally that each core will execute its designated tasks in the proper sequence at all times, and within an acceptable time period.

Multi-core semiconductor manufacturers designing MCPs for the commercial market tend to optimize their processors for performance, not safety and isolation, and additionally do not tend to publish details of the internal structure of their MCPs. In this way, it is difficult to predict the kinds of scheduling conflicts that might occur. This can make it challenging to design software for execution by such processors, especially in safety-critical contexts

Manufacturers of commercial off-the-shelf (COTS) systems do provide Hardware Performance Monitors (HPM) in their designs to allow some degree of visibility of specific events over the system, to support verification and runtime testing. These HPM units incorporate Performance Monitoring Counters (PMCs) that are used to build software tests by interrogating their assigned registers over time.

A representative platform of HPM capabilities is the NXP T2080 platform, which is an MCP architecture that has been broadly adopted for embedded systems to implement safety-critical applications. The NXP T2080 processor comprises 4 cores, each owning its private instruction and data L1 cache. An L2 banked cache of 2MB is shared among cores and connected to the memory controller through the CoreNet Coherence Fabric (CCF). Its HPM unit allows to monitor L2 and CCF events through a set of PMCs.

However, very often, such general-purpose architectures need to balance the number of events and registers to manage complexity and space, which limits their usefulness. In addition, software-based tests and register gathering add overhead to the already complex applications.

As a result, the design and customization of microarchitectures by Tier-1 suppliers (assemblers) is gaining traction against the use of COTS systems. This presents the ability to specially adapt the microarchitecture to the customer needs, whilst allowing for a fuller understanding of the limitations of the hardware implementation. This is usually not possible in the case of COTS-based microprocessors, where manufacturers keep their intellectual property (IP) cores proprietary, and rarely reveal their HW implementations in detail to the public in the Technical Reference Manuals (TRM). The lack of this information enforces assemblers to conduct large and costly campaigns to reveal any hidden implementation to fully understand the behaviour of the System on Chip (SoC) and be able to certify the final product regarding determinism.

AGIRRE IRUNE ET AL: "On the tailoring of CAST-32A certification guidance to real COTS multicore architectures" discloses tailoring of CAST-32A certification guidance to real COTS multicore architectures. XU YINAN ET AL: "Towards developing High Performance RISC-V Processors Using Agile Methodology" discloses aspects relating to developing High Performance RISC-V Processors Using Agile Methodology. WO 2020/112999 A1 discloses integrated circuits as a service.

Even with such options, there still exists a need to more efficiently design, assess, validate, mitigate issues and repeat prototyping (if necessary) in order to create custom microarchitectures based on their specific requirements. In addition, there exists a need to be able to monitor the processes being executed on an MCP in order to quickly and accurately identify anomalies in their nominal execution (i.e. if a given task does not run as it was expected to) and identify potential malware.

### SUMMARY

According to a first aspect, there is provided a method for designing custom microarchitectures, the method comprises proposing an initial microarchitecture comprising at least two intellectual property, IP, components and at least one interference channel, ICh, based on final requirements of the microarchitecture; a) prototyping the proposed microarchitecture; b) executing at least one µBenchmark on the prototyped microarchitecture; and c) monitoring at least one Performance Monitoring Counter, PMC, on each IP component resulting from the execution of the at least one µBenchmark to identify whether the prototyped microarchitecture satisfies timing and contention requirements of the microarchitecture.

The method comprises step d) If all timing and contention requirements are met by the prototyped microarchitecture, then the prototyped microarchitecture may be accepted as the custom microarchitecture. However, if all timing and contention requirements are not met, then a source of contention is identified by identifying bottlenecks in the at least one PMC during the execution of the at least one µBenchmark, and the proposed microarchitecture is adapted so as to mitigate the contention scenario, and/or modifying a Hardware Performance Monitor, HPM, unit associated with at least one of the IP components so as to define at least one new PMC. Then steps a) to d) may be repeated starting from the the adapted proposed microarchitecture, hence resulting in a new prototyped microarchitecture which is then tested to see if all timing and contention requirements are met. This may be repeated as many times as necessary (with an adapted proposed microarchitecture each time, and therefore a new prototyped microarchitecture) until all timing and contention requirements are met, at which point, the latest prototyped microarchitecture (i.e. the microarchitecture that satisfies all of the timing and contention requirements) may be accepted as the custom microarchitecture.

In this way, such a method defines an iterative method that allows for fulfilment of the requirements on interference and contention of a final SoC configuration. In doing so, it is possible to specifically design a microarchitecture to overcome the non-deterministic behavior that SoCs display when multiple computational units are accessing to the shared resources. Such a method emphasises in a refinement and iterative process where the main objective is to minimize or reduce the potential contention scenarios. In addition, the iterative method allows for new PMCs to be defined during testing/prototyping of a microarchitecture, thereby allowing for more accurate characterisation of the microarchitecture.

Essentially, there is defined a method where an initial microarchitecture can be proposed, prototyped and tested for whether it satisfies testing and contention requirements of the microarchitecture. Based on these results, the microarchitecture may be modified, and tested again, and the process repeated until all requirements are met and a custom microarchitecture can be proposed.

As would be appreciated, µBenchmarks are synthetic applications specially designed to stress different shared resources to reveal and measure the system behaviour under contention scenarios. For both heterogenous and homogeneous architectures, these interference µBenchmarks may be capable of triggering the contention from all of the interfering actors accessing the shared resources in the final SoC (e.g. cores, DMAs or any master peripheral). An IP component is a master/interfering device in the proposed architecture.

The proposed microarchitecture may comprise *mi* IP components, and *cj* IChs, and step b) may comprise executing n µBenchmarks, n being equal to *mi* x *cj,* each µBenchmark being configured to stress a specific ICh for a given IP component of the prototyped microarchitecture. This allows for a complete characterisation of all interference channels of a prototyped microarchitecture.

The step of adapting the proposed architecture may comprise identifying a source of contention on the prototyped microarchitecture, and modifying a Hardware Performance Monitor, HPM, unit associated with at least one of the IP components so as to define at least one new PMC based on the identified source of contention on the prototyped microarchitecture to allow more accurate characterisation of the IChs. In this way, the monitored PMCs can be modified between each iteration of the method so as to result in a more accurate characterisation of the interference channels.

The step of adapting the microarchitecture so as to mitigate the contention scenario may comprise identifying a source of contention on the prototyped microarchitecture, and adapting the microarchitecture so as to mitigate the identified source of contention. For example, the step of adapting the microarchitecture may comprise at least one of the following: shared bus isolation, cache partitioning, cache resizing, separating peripherals, customising instructions. This allows for targeted modifications based on the areas in which excessive contention is identified.

Step a) may comprise defining a high-level circuit description in Chisel, and converting the higher level circuit description to Verilog for synthesis and/or simulation. By using Hardware Construction Languages (HCLs) as a placeholder framework allows for a fast prototyping, thereby reducing the cost-effort factor in prototyping new microarchitectures.

Step a) may comprise prototyping the microarchitecture in a simulated environment, in which case, steps b) and c) may be performed within the simulated environment.

Alternatively, step a) may comprise synthesising the microarchitecture, and steps b) and c) may then be performed on the synthesised microarchitecture. The synthetized microarchitecture may be a Custom System on Chip, SoC, architecture in a field-programmable gate array, FPGA, circuit.

The initial microarchitecture may be proposed based on at least one of the following requirements for the final microarchitecture: Type of core, Core size, Number of cores, FPU, Custom instructions, Cache size, L2 cache, DDR controller, MMU, PMP, DTIM/ITIM (tightly coupled memory), On-chip scratchpad memory, Branch prediction capabilities, Number of PMCs, Redundancy on MMIOs, MM (memory mapped) peripherals for processing, MM peripherals for communication and actuation: I2C, SPI, UART, ARINC-429, GPIOs, PWM.

At least one of the following PMCs may be monitored: cache hits and misses, number of instructions retired, number of clock cycles, number and types of transactions through the system bus, number of cycles the HW resource has been idle, stalled or busy.

At least one µBenchmark may be selected from a database of µBenchmarks.

According to a second aspect, there is provided a method for manufacturing custom microarchitectures, the method comprising designing a custom microarchitecture by following the method described above, manufacturing the custom microarchitecture.

According to a third aspect, there is provided custom microarchitecture manufactured by the second aspect. The custom microarchitecture may be for use in avionics.

### BRIEF DESCRIPTION OF THE DRAWINGS

Certain examples of the disclosure will now be described, by way of example only, with reference to the accompanying drawings, in which:
Figure 1 is a schematic diagram of an example MPSoC with multiple computational units, shared memory hierarchies and interconnection buses with interference channels and possible contention scenarios;
Figure 2 is a sample generation flow that converts Scala and Chisel descriptions into low level Verilog;
Figure 3 is a flow chart describing an agile and iterative methodology to design custom architectures for low interference contention with PMCs; and
Figure 4 is an illustration of interference channels associated with various IP components.

### DETAILED DESCRIPTION

Whilst the methods and systems herein may be described with regards to a multi-core processor (MCP), it would be appreciated that the teaching herein is not limited to only a single processor with multiple cores, but also other multiple processing systems, such as a network of separate processors (i.e. multi-processor systems), and the design process thereof.

As outlined above, the design of custom microarchitectures is gaining traction against the use of COTS systems. In doing so, it is possible to adapt the microarchitecture to the desired application, and by designing a custom microarchitecture, inherently the exact structure of the microarchitecture (and its limitations) will be fully understood. This is not the case in COTS-based microprocessors, where the exact structure often remains proprietary, and the HW implementations are not disclosed. This hinders determinism verification of the system for certification, which is particularly an issue in safety critical applications.

In order to aid designing/customising microarchitectures, there exist several electronic design automation (EDA) tools. For example, there exist some fast-prototyping frameworks tailored to the design of SoC architectures, such as Chipyard. Essentially, such frameworks allow for the generation of custom architectures starting from high-level parameters, such as the number of number of cores, memory hierarchy, bus protocols, etc. These agile-type frameworks can be ideally used to iteratively generate new HW designs until the interference contention requirement is met.

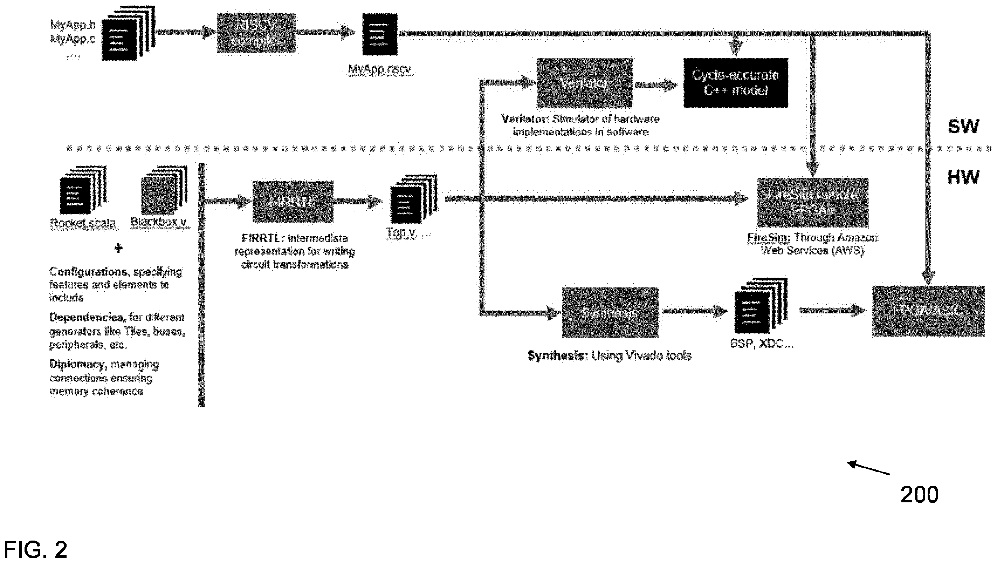

Chipyard is an example of such a framework which uses Chisel (a Hardware Construction Language) to design hardware, together with Scala (a functional and object-oriented programming language) as scripting/glue code to put the different Ips together, and hence convert higher level circuit descriptions (e.g. a specification of hardware) to Verilog for synthesis and simulation. Verilog is an example Hardware Description Language (HDL) which works at Register Transfer Level (RTL). Figure 2 shows a sample generation flow that converts Chisel and Scala descriptions into low level Verilog, which then may be synthesised and/or simulated.

In this way, the generated HDL code (i.e. the Verilog code) may then be synthesised by a synthesis tool into a gate netlist, which is a specification of physical electronic components and how they are connected together, which can then be placed and routed in order to provide a microarchitecture. Alternatively, the HDL code may be simulated.

As would be appreciated, rather than utilising HCLs, it is possible to directly utilise RTL and then synthesise or simulate the resulting microarchitecture. However, by using HCLs as the placeholder framework allows a fast prototyping, it is possible to reduce the cost-effort factor in prototyping new microarchitectures.

By providing such an HCL framework, it allows for the generation, deployment, and verification of different HW configurations in an iterative way. Such a framework may include tools to generate the Verilog files describing the architecture at RTL level and the deployment of the architecture in a testbench environment, whether that is simulated or synthetized, into a FPGA to enable a closed-loop for the verification and the testing process. Then, the performance of the deployed architecture may be evaluated, and modified as necessary.

Whilst the above details some specific frameworks/languages, it would be appreciated that other such suitable frameworks may be used.

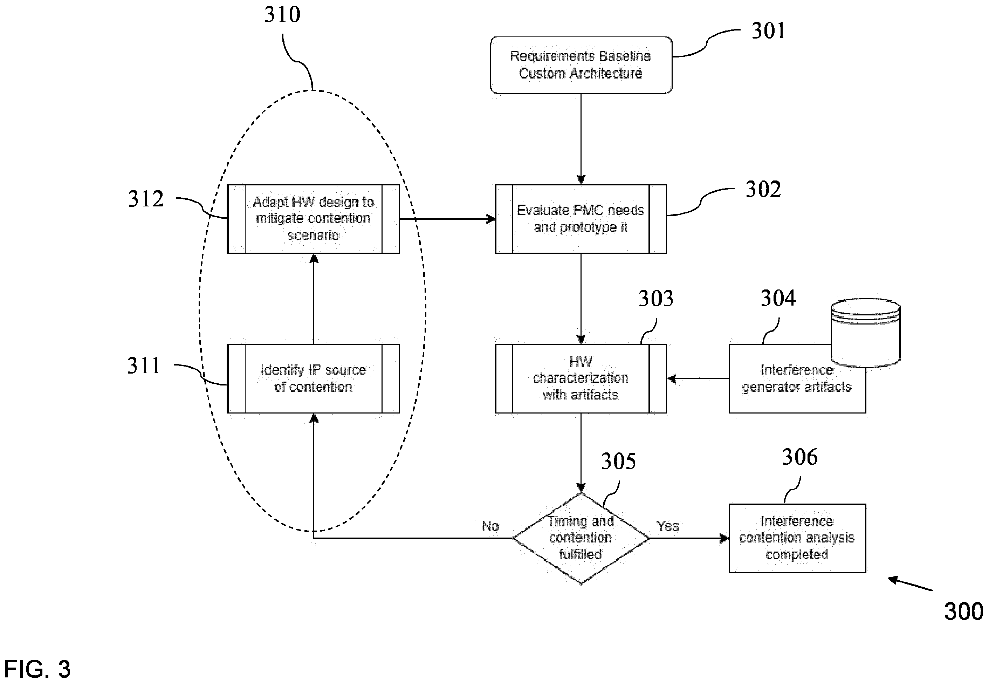

Such an agile and iterative methodology to design custom architectures for low interference contention with PMCs is shown in Figure 3. The method defines steps to fulfil the requirements on interference and contention of a final SoC configuration. In doing so, it is possible to specifically design a microarchitecture to overcome the non-deterministic behavior that SoCs display when multiple computational units are accessing to the shared resources.

Such a process begins at step 301 by the definition of the initial requirements that are to be imposed on the final Custom SoC system. For example, the initial requirements may include timing and contention objectives apart from the IP block specification (e.g. number of cores, memory hierarchy, bus protocols, DMAs and others). The initial configuration is considered the baseline architecture.

By way of non-limiting example, the initial requirements may comprise one or more of the following requirements:
* Type of core: in order (Rocket) / out of order (BOOM)
* Core size: small / medium / big
* Number of cores
* FPU
* Custom instructions
* Cache size
* Optional L2 cache
* Optional DDR controller
* MMU
* PMP
* DTIM/ITIM (tightly coupled memory)
* On-chip scratchpad memory
* Branch prediction capabilities
* Number of PMCs
* Redundancy on MMIOs
* External/Legacy MM peripherals for processing
* External/Legacy MM peripherals for communication and actuation: I2C, SPI, UART, ARINC-429, GPIOs, PWM.

Once an initial model has been generated from the requirement baselines, specific events that allow for the measurement of the timing behaviour and the contention on the shared resources (e.g. bus interconnects) are implemented in the HCL (or as above, directly in the RTL code) at step 302. For example, these events may be implemented in Chisel/Scala using an agile framework, and then the resulting microarchitecture may be prototyped (or simulated). The microarchitecture configuration may then be characterized at step 303 using a set of artifacts that expose the timing behaviour and the potential contention of the development iteration (in the first instance, the baseline architecture).

Then, by evaluating the timing and contention parameters and comparing whether timing and contention requirements are fulfilled at decision block 305, it is possible to apply a feedback loop 310 which, if necessary, identifies the source of contention in step 311 and suggests appropriate modification of the HW design in step 312 as a mitigation to any issues. For example, if a source of contention is identified, the skilled person might modify one or more of the following aspects of the HW design:
* Shared bus isolation
* Cache partitioning
* Cache resizing
* Separate peripherals
* Custom instructions

Of course, any suitable HW modification may be proposed, and incorporated into the HW design.

Such a feedback loop may be repeated until all timing and contention requirements are fulfilled at decision block 305, at which point the interference contention analysis may be considered completed at step 306.

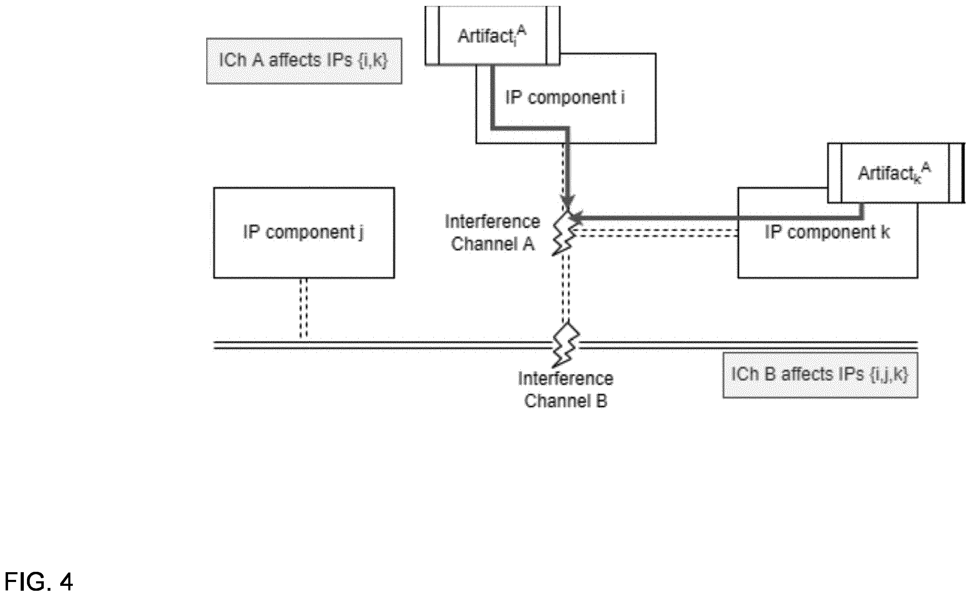

In order to identify (in the testbench, whether synthesised or simulated) potential contention scenarios, a database of interference generator artifacts 304 may be developed. These artifacts, for example µBenchmarks, are synthetic applications specially designed to stress different shared resources to reveal and measure the system behavior under contention scenarios. For both heterogenous and homogeneous architectures, these interference generators/artifacts/µBenchmarks should be capable of triggering the contention from all of the interfering actors accessing the shared resources in the final SoC (e.g. cores, DMAs or any master peripheral). An illustration of various IP components and their associated interference channels may be seen in Figure 4.

The number of interference generators that should be applied may be determined by the number of master/interfering devices, e.g. IP components (*mi*)*,* and the number of identified interference channels, ICh (*cj*)*.* Therefore, in order to have a high coverage of all possible sources of contention, the number of interference generators provided may be *mi*× *cj.* Each of these interference generators will stress a specific channel (e.g. ICh A or B shown in Figure 4) for a given IP component (*mi*)*.* Such interference may be executed in either a simulated environment resulting from a simulation in a testbench environment, or a synthetized version of the Custom SoC architecture in a FPGA.

As outlined above, one way to characterize the contention on the different IChs is to monitor specific PMCs that are to be implemented and used on the HW. Such counters capture the behavior on the shared resource quantifying the level of contention and the observed delay in the nominal execution time. As such, HPMs may be added to different IP components so as to allow some degree of visibility of specific events over the system, to support verification and runtime testing and allow monitoring of contention. These HPM units incorporate a set of programmable PMC registers that account for specific system events.

PMCs allow gathering of specific system information such as: cache hits and misses, number of instructions retired, number of clock cycles, number and types of transactions through the system bus, number of cycles the HW resource has been idle, stalled or busy. This information is collected through dedicated connections (wires) and gathered by contention artifacts querying the PMC registers on the system over time. By designing a custom microarchitecture, it is possible to customise the HPM units and the gathered PMCs so as to allow for a more accurate characterisation of the contention experienced by the SoC.

As such, the method proposed in Figure 3 allows for, in step 302, the evaluation of the PMCs that are likely to be required for the proper characterisation of the hardware, and then allows for the tracking of such PMCs in the prototyped hardware.

The PMCs set in an initial architecture may be a set of standard PMCs that are always selected at the beginning, or selected based on likely interference channels according to the requirements of the microarchitecture. For example, it may be that PMCs on the caches or DDR controller are the most useful. Alternatively, at least initially, the maximum number possible of PMCs may be selected, and then only the PMCs displaying the most useful information may be further analysed.

The PMCs to be monitored may be selected by identifying the signals experiencing a bottleneck in the testbench process and using the artifacts executed on the different IP components. By using a process including identifying relevant PMCs resulting from the testing process, the additional latency information obtained during the SoC design may be used to motivate the definition of new PMCs (and the corresponding signals tied to the HPM) for future iterations of the HW to be able to measure the desired event motivating the delay (e.g. device busy, transaction rejected or data requested).

For example, the PMCs experiencing a bottleneck in the testbench process may be identified by first running the workload in isolation, and then running the workload with artifacts/µBenchmarks in parallel (e.g. running on other cores). Then, the latency/contention (time in isolation vs time with parallel workload) may be analysed and from this, the possible IChs may be identified. As would be appreciated, the IChs depend on the type of workload, but most likely will be memory IP components (caches/memory controllers) or other shared peripherals such as a universal asynchronous receiver-transmitter (UART), an accelerator, or a system bus. Following the identification of the possible IChs, PMCs may be created/enabled, which allow for the assessment of the behavior of those interference channels. For example, should it be determined that a UART may be a potential ICh, in the next iteration of the microarchitecture, a PMC measuring communications to/from the UART may be defined.

Therefore, by using an iterative method such as the method shown in Figure 3, it is possible to modify the monitored PMCs between each pass. For example, in the first pass, a standard set of HPMs monitoring a standard set of PMCs may be utilised by the IP component(s) of the baseline custom architecture in step 302. Then, when the HW is characterised in step 303 by executing the interference generators/artifacts/µBenchmarks, and the subsequent results are analysed, it may be decided that it would be useful to monitor additional and/or other PMCs. Therefore, in step 302 of the subsequent pass, the HPMs of the HW design may be modified and prototyped, in order to track these new PMCs to allow for a more accurate characterisation of the interference channels of the microarchitecture.

As would be appreciated, the structure of the HPM blocks may depend on the complexity of the events to be analysed. For example, the HPM blocks may be composed of sequential state machines, instant combinational logic or simply a conglomerate of signals tied together to compute derived events.

The proposed approach allows for the generation of low interference contention multi-processor systems, and in particular SoC designs. As such, it allows for a faster adoption of highly integrated MPSoCs, and a reduced time to market. Further, certification costs may be reduced due to the minimization of contention scenarios. In addition, the migration of avionics systems from Federated systems to Integrated Modular Avionics are enabled by the adoption of heterogeneous/homogenous SoCs.

It will be appreciated by those skilled in the art that the disclosure has been illustrated by describing one or more specific examples, but is not limited to these examples; many variations and modifications are possible within the scope of the accompanying claims.

## Claims

1. A method for designing a custom microarchitecture, the method comprising
proposing an initial microarchitecture comprising at least two intellectual property, IP, components and at least one interference channel, ICh, based on final requirements of the microarchitecture;
a) prototyping the proposed microarchitecture;
b) executing at least one µBenchmark on the prototyped microarchitecture;
c) monitoring at least one Performance Monitoring Counter, PMC, resulting from the execution of the at least one µBenchmark to identify whether the prototyped microarchitecture satisfies timing and contention requirements of the microarchitecture; and
d) if all timing and contention requirements are met, then accepting the prototyped microarchitecture as the custom microarchitecture; or
if all timing and contention requirements are not met, then identifying a source of contention by identifying bottlenecks in the at least one PMC during the execution of the at least one µBenchmark, and adapting the proposed microarchitecture so as to mitigate the contention scenario and/or modifying a Hardware Performance Monitor, HPM, unit associated with at least one of the IP components so as to define at least one new PMC; and then repeating steps a) to d) with the adapted proposed microarchitecture.

2. The method of claim 1, wherein the proposed microarchitecture comprises *mi* IP components, and *cj* IChs, and step b) comprises executing *n* µBenchmarks, *n* being equal to *mi* x *cj,* each µBenchmark being configured to stress a specific ICh for a given IP component.

3. The method of claim 1 or 2, wherein the step of adapting the proposed architecture comprises identifying a source of contention on the prototyped microarchitecture, and modifying a Hardware Performance Monitor, HPM, unit associated with at least one of the IP components so as to define at least one new PMC based on the identified source of contention on the prototyped microarchitecture to allow more accurate characterisation of the IChs.

4. The method of any preceding claim, wherein the step of adapting the microarchitecture comprises identifying a source of contention on the prototyped microarchitecture, and adapting the microarchitecture so as to mitigate the identified source of contention.

5. The method of claim 4, wherein the step of adapting the microarchitecture comprises at least one of the following: shared bus isolation, cache partitioning, cache resizing, separating peripherals, customising instructions.

6. The method of any preceding claim, wherein step a) comprises defining a high level circuit description in Chisel, and converting the higher level circuit description to Verilog for synthesis and/or simulation.

7. The method of any preceding claim, wherein step a) comprises prototyping the microarchitecture in a simulated environment, and steps b) and c) are performed within the simulated environment.

8. The method of any of claims 1 to 6, wherein step a) comprises synthesising the microarchitecture, and steps b) and c) are performed on the synthesised microarchitecture.

9. The method of claim 8, wherein the synthetized microarchitecture is a Custom System on Chip, SoC, and prototyped in a field-programmable gate array, FPGA, circuit.

10. The method of any preceding claim, wherein the initial microarchitecture is proposed based on at least one of the following requirements: Type of core, Core size, Number of cores, FPU, Custom instructions, Cache size, L2 cache, DDR controller, MMU, PMP, DTIM/ITIM (tightly coupled memory), On-chip scratchpad memory, Branch prediction capabilities, Number of PMCs, Redundancy on MMIOs, Memory Mapped, MM, peripherals for processing, MM peripherals for communication and actuation: I2C, SPI, UART, ARINC-429, GPIOs, PWM.

11. The method of any preceding claim, wherein at least one of the following or similar PMCs are monitored: cache hits and misses, number of instructions retired, number of clock cycles, number and types of transactions through the system bus, number of cycles the HW resource has been idle, stalled or busy.

12. The method of any preceding claim, wherein the at least one µBenchmark is selected from a database of µBenchmarks.

13. A method for manufacturing custom microarchitectures, the method comprising
designing a custom microarchitecture by following the method as claimed in any preceding claim,
manufacturing the accepted prototyped custom microarchitecture.

## Patentansprüche

1. Verfahren zur Entwicklung einer angepassten Mikroarchitektur, wobei das Verfahren Folgendes umfasst:
Vorschlagen einer anfänglichen Mikroarchitektur, die mindestens zwei Komponenten geistigen Eigentums, IP, und mindestens einen Interferenzkanal, ICh, umfasst, basierend auf endgültigen Anforderungen der Mikroarchitektur;
a) Prototypisieren der vorgeschlagenen Mikroarchitektur;
b) Ausführen mindestens eines µ-Benchmarks an der prototypisierten Mikroarchitektur;
c) Überwachen mindestens eines Leistungsüberwachungszählers, PMC, der aus der Ausführung des mindestens einen µ-Benchmarks resultiert, um zu identifizieren, ob die prototypisierte Mikroarchitektur Zeit- und Konfliktanforderungen der Mikroarchitektur erfüllt; und
d) falls alle Zeit- und Konfliktanforderungen erfüllt werden, dann Zulassen der prototypisierten Mikroarchitektur als angepasste Mikroarchitektur; oder
falls nicht alle Zeit- und Konfliktanforderungen erfüllt werden, dann Identifizieren einer Konfliktquelle durch Identifizieren von Engpässen in dem mindestens einen PMC während der Ausführung des mindestens einen µ-Benchmarks und Anpassen der vorgeschlagenen Mikroarchitektur, um das Konfliktszenario zu entschärfen, und/oder Modifizieren einer Hardwareleistungsüberwachungseinheit, HPM-Einheit, die mit mindestens einer von den IP-Komponenten verknüpft ist, um mindestens einen neuen PMC zu definieren; und anschließendes Wiederholen von Schritt a) bis d) mit der angepassten vorgeschlagenen Mikroarchitektur.

2. Verfahren nach Anspruch 1, wobei die vorgeschlagene Mikroarchitektur *mi* IP-Komponenten und *cj* IChs umfasst und Schritt b) Ausführen von *n* µ-Benchmarks umfasst, wobei *n* gleich *mi* x *cj* ist, wobei jeder µ-Benchmark so konfiguriert ist, dass er einen spezifischen ICh für eine gegebene IP-Komponente beansprucht.

3. Verfahren nach Anspruch 1 oder 2, wobei der Schritt des Anpassens der vorgeschlagenen Architektur Identifizieren einer Konfliktquelle an der prototypisierten Mikroarchitektur und Modifizieren einer Hardwareleistungsüberwachungseinheit, HPM-Einheit umfasst, die mit mindestens einer von den IP-Komponenten verknüpft ist, um mindestens einen neuen PMC basierend auf der identifizierten Konfliktquelle in der prototypisierten Mikroarchitektur zu definieren, um eine genauere Charakterisierung der IChs zu ermöglichen.

4. Verfahren nach einem der vorhergehenden Ansprüche, wobei der Schritt des Anpassens der Mikroarchitektur Identifizieren einer Konfliktquelle in der prototypisierten Mikroarchitektur und Anpassen der Mikroarchitektur umfasst, um die identifizierte Konfliktquelle zu entschärfen.

5. Verfahren nach Anspruch 4, wobei der Schritt des Anpassens der Mikroarchitektur mindestens eines von Folgendem umfasst: Trennung gemeinsamer Busse, Cache-Partitionierung, Cache-Größenänderung, Trennung von Peripheriegeräten, Anpassung von Anweisungen.

6. Verfahren nach einem der vorhergehenden Ansprüche, wobei Schritt a) Definieren einer High-Level-Schaltungsbeschreibung in Chisel und Konvertieren der High-Level-Schaltungsbeschreibung in Verilog zur Synthese und/oder Simulation umfasst.

7. Verfahren nach einem der vorhergehenden Ansprüche, wobei Schritt a) Prototypisieren der Mikroarchitektur in einer simulierten Umgebung umfasst und Schritt b) und c) innerhalb der simulierten Umgebung ausgeführt werden.

8. Verfahren nach einem der Ansprüche 1 bis 6, wobei Schritt a) Synthetisieren der Mikroarchitektur umfasst und Schritt b) und c) an der synthetisierten Mikroarchitektur ausgeführt werden.

9. Verfahren nach Anspruch 8, wobei es sich bei der synthetisierten Mikroarchitektur um einen angepassten Systemchip, SoC, handelt, der in einer feldprogrammierbaren Gate-Array-Schaltung, FPGA-Schaltung, prototypisiert wird.

10. Verfahren nach einem der vorhergehenden Ansprüche, wobei die anfängliche Mikroarchitektur basierend auf mindestens einer der folgenden Anforderungen vorgeschlagen wird: Kerntyp, Kerngröße, Anzahl der Kerne, FPU, benutzerdefinierte Anweisungen, Cache-Größe, L2-Cache, DDR-Controller, MMU, PMP, DTIM/ITIM (eng gekoppelter Speicher), On-Chip-Scratchpad-Speicher, Sprungvorhersagefähigkeiten, Anzahl von PMCs, Redundanz auf MMIOs, Memory Mapped-Peripheriegeräte, MM-Peripheriegeräte, zur Verarbeitung, MM-Peripheriegeräte zur Kommunikation und Betätigung: I2C, SPI, UART, ARINC-429, GPIOs, PWM.

11. Verfahren nach einem der vorhergehenden Ansprüche, wobei mindestens einer der folgenden oder ähnlicher PMCs überwacht wird: Cache-Treffer und -Fehler, Anzahl der ausgeführten Befehle, Anzahl der Taktzyklen, Anzahl und Art der Transaktionen über den Systembus, Anzahl der Zyklen, in denen die HW-Ressource im Leerlauf, blockiert oder belegt war.

12. Verfahren nach einem vorhergehenden Anspruch, wobei der mindestens eine µ-Benchmark aus einer Datenbank von µ-Benchmarks ausgewählt wird.

13. Verfahren zur Herstellung angepasster Mikroarchitekturen, wobei das Verfahren Folgendes umfasst:
Entwickeln einer angepassten Mikroarchitektur durch Befolgen des Verfahrens nach einem der vorhergehenden Ansprüche,
Herstellen der zugelassenen prototypisierten angepassten Mikroarchitektur.

## Revendications

1. Procédé de conception d'une microarchitecture personnalisée, le procédé comprenant
le fait de proposer une microarchitecture initiale comprenant au moins deux composants de propriété intellectuelle, IP, et au moins un canal d'interférence, ICh, en fonction des exigences finales de la microarchitecture ;
a) prototypage de la microarchitecture proposée ;
b) exécution d'au moins un µBenchmark sur la microarchitecture prototypée ;
c) surveillance d'au moins un compteur de surveillance des performances, PMC, résultant de l'exécution de l'au moins un µBenchmark afin d'identifier si la microarchitecture prototypée satisfait aux exigences de synchronisation et de contention de la microarchitecture ; et
d) si toutes les exigences de synchronisation et de contention sont satisfaites, alors acceptation de la microarchitecture prototypée comme microarchitecture personnalisée ; ou
si toutes les exigences de synchronisation et de contention ne sont pas satisfaites, alors identification d'une source de contention en identifiant des goulots d'étranglement dans au moins un PMC pendant l'exécution de l'au moins un µBenchmark, et adaptation de la microarchitecture proposée afin d'atténuer le scénario de contention et/ou modification d'une unité de surveillance des performances matérielles, HPM, associée à au moins l'un des composants IP afin de définir au moins un nouveau PMC ; puis répétition des étapes a) à d) avec la microarchitecture proposée adaptée.

2. Procédé selon la revendication 1, dans lequel la microarchitecture proposée comprend *mi* composants IP et *cj* ICh, et l'étape b) comprend l'exécution de *n* µBenchmarks, *n* étant égal à *mi* x *cj*, chaque µBenchmark étant configuré pour mettre l'accent sur un ICh spécifique pour un composant IP donné.

3. Procédé selon la revendication 1 ou 2, dans lequel l'étape d'adaptation de l'architecture proposée comprend l'identification d'une source de contention sur la microarchitecture prototypée et la modification d'une unité de surveillance des performances matérielles, HPM, associée à au moins l'un des composants IP afin de définir au moins un nouveau PMC en fonction de la source de contention identifiée sur la microarchitecture prototypée pour permettre une caractérisation plus précise des ICh.

4. Procédé selon une quelconque revendication précédente, dans lequel l'étape d'adaptation de la microarchitecture comprend l'identification d'une source de contention sur la microarchitecture prototypée et l'adaptation de la microarchitecture afin d'atténuer la source de contention identifiée.

5. Procédé selon la revendication 4, dans lequel l'étape d'adaptation de la microarchitecture comprend au moins l'un des éléments suivants : isolation de bus partagé, partitionnement de mémoire cache, redimensionnement de mémoire cache, séparation de périphériques, personnalisation d'instructions.

6. Procédé selon une quelconque revendication précédente, dans lequel l'étape a) comprend la définition d'une description de circuit de haut niveau dans Chisel et la conversion de la description de circuit de niveau supérieur en Verilog pour la synthèse et/ou la simulation.

7. Procédé selon une quelconque revendication précédente, dans lequel l'étape a) comprend le prototypage de la microarchitecture dans un environnement simulé et les étapes b) et c) sont réalisées dans l'environnement simulé.

8. Procédé selon l'une quelconque des revendications 1 à 6, dans lequel l'étape a) comprend la synthèse de la microarchitecture et les étapes b) et c) sont réalisées sur la microarchitecture synthétisée.

9. Procédé selon la revendication 8, dans lequel la microarchitecture synthétisée est un système sur puce, SoC, personnalisé et prototypée dans un circuit de réseau de portes programmables par l'utilisateur, FPGA.

10. Procédé selon une quelconque revendication précédente, dans lequel la microarchitecture initiale est proposée en fonction d'au moins l'une des exigences suivantes : type de cœur, taille de cœur, nombre de cœurs, FPU, instructions personnalisées, taille de mémoire cache, mémoire cache L2, contrôleur DDR, MMU, PMP, DTIM/ITIM (mémoire étroitement couplée), mémoire de travail sur puce, capacités de prédiction de branchement, nombre de PMC, redondance sur les MMIO, périphérique de mémoire mappée, MM, pour le traitement, périphériques MM pour la communication et l'actionnement : I2C, SPI, UART, ARINC-429, GPIO, PWM.

11. Procédé selon une quelconque revendication précédente, dans lequel au moins l'un des PMC suivants ou similaires est surveillé : succès et échecs de mémoire cache, nombre d'instructions retirées, nombre de cycles d'horloge, nombre et types de transactions par le biais du bus système, nombre de cycles pendant lesquels la ressource matérielle a été inactive, bloquée ou occupée.

12. Procédé selon une quelconque revendication précédente, dans lequel au moins un µBenchmark est sélectionné à partir d'une base de données de µBenchmarks.

13. Procédé de fabrication de microarchitectures personnalisées, le procédé comprenant
la conception d'une microarchitecture personnalisée en suivant le procédé selon une quelconque revendication précédente,
la fabrication de la microarchitecture personnalisée prototype acceptée.
